# DEMANDE DE BREVET EUROPEEN

(11) **EP 2 278 435 A2**
(43) Date de publication de la demande: **26.01.2011**
(21) Numéro de dépôt: 10162171.2
(22) Date de dépôt: 06.05.2010
(51) Int. Cl.: G06F 3/01, G09B 21/00, G06F 3/041, G06F 3/044

(54) **Gant et écran tactile permettant de lire des informations par le toucher**

(30) Priorité: 15.05.2009 FR 0953217
(71) Demandeur: Alcatel Lucent, 75008 Paris (FR)
(72) Inventeur: Toubiana, Vincent, 91620 Nozay (FR); Christophe, Benoît, 91620 Nozay (FR); Verdot, Vincent, 91620 Nozay (FR)
(74) Mandataire: Sciaux, Edmond

(57) **Abrégé**

Ce gant (G1) permet de lire des informations par le toucher, lorsqu'un doigt (1) de ce gant effleure un écran (E1) comporte au moins une zone (31, 32, 33) émettant un champ électrique continu. Ce gant comporte au moins un doigt (1) de gant comportant :
- une paroi interne (24) souple et diélectrique, apte à recevoir un doigt (28) d'un usager,
- une paroi externe (23), souple et diélectrique,
- un liquide (25) contenu dans au moins un espace entre ces deux parois,
- et des microparticules (6, 7) placées dans ce liquide, ces microparticules étant électriquement chargées avec une même polarité, et étant aptes à se déplacer dans ce liquide sous l'action d'un champ électrique.

## Description

L'invention concerne un gant et écran tactile permettant de tire des informations par le toucher, ce gant transmettant sous forme tactile des informations que lui fournit l'écran, lorsqu'un usager enfile ce gant et effleure la surface de l'écran avec un doigt de ce gant.

De nombreux appareils mobiles comportent maintenant un écran tactile constituant une interface graphique pour un usager : Un usager lit des icônes ou des menus sur cet écran, et il entre une commande en touchant avec un doigt ou un stylet, une zone de l'écran affichant une icône ou quelques mots. Pour utiliser un écran tactile il est donc nécessaire de voir l'écran afin de savoir à quel endroit il faut toucher l'écran pour entrer une commande donnée. Cependant, dans certaines circonstances, l'utilisateur ne peut pas voir ce qui est affiché sur l'écran : par exemple si l'appareil reste dans une poche ou un sac de l'utilisateur, ou si l'utilisateur est aveugle. Dans ces circonstances, l'usager ne peut pas utiliser un écran tactile puisqu'il ne voit pas la position des zones sensibles de l'écran, et ne voit pas les informations affichée en réponse sur l'écran.

Pour aider les aveugles, et les malvoyants, il est connu d'utiliser un logiciel de conversion texte-parole, mais cette solution n'est pas totalement satisfaisante. Un tel logiciel ne sait pas décrire autre chose que du texte : par exemple une icône ou une forme géométrique ne peut pas être directement convertie en paroles. D'autre part, l'énoncé d'un mot affiché n'indique pas la position de ce mot sur l'écran. Cette solution ne permet donc pas de choisir une commande sur un écran tactile puisque l'énoncé d'un mot clef affiché n'indique pas la zone où il faut toucher l'écran.

Le but de l'invention est de remédier à cet inconvénient des écrans tactiles.

Un premier objet de l'invention est un gant permettant de lire des informations par le toucher, lorsqu'un doigt de ce gant effleure un écran comportant au moins une zone émettant un champ électrique continu, **caractérisé en ce qu'**il comporte au moins un doigt de gant comportant :
- une paroi interne souple et diélectrique, apte à recevoir un doigt d'un usager,
- une paroi externe, souple et diélectrique,
- un liquide contenu dans au moins un espace entre ces deux parois,
- et des microparticules placées dans ce liquide, ces microparticules étant électriquement chargées avec une même polarité, et étant aptes à se déplacer dans ce liquide sous l'action d'un champ électrique.

Le gant ainsi caractérisé permet de percevoir une information par le toucher parce qu'il applique une variation de pression sur un doigt de l'utilisateur lorsque le déplacement du doigt provoque une variation du champ électrique appliqué aux microparticules chargées. En effet, la variation du champ électrique appliqué aux microparticules chargées provoque un déplacement de ces microparticules. Ce déplacement provoque une variation de pression sur les parois du gant. Cette variation de pression perçue en effleurant un écran permet à un usager de percevoir un graphisme par le toucher.

Un second objet de l'invention est un écran tactile permettant de lire des informations par le toucher, comportant :
- au moins une électrode,
- au moins une source de tension électrique,
- et des moyens de commutation reliés à cette électrode pour créer un champ électrique à partir de cette électrode, ces moyens de commutation étant commandés par une source d'informations ;
**caractérisé en ce que** ces moyens de commutation sont commandés de façon à appliquer à cette électrode une tension continue qui peut prendre deux signes opposés, son signe étant fonction d'une information binaire fournie par la source d'information.

L'écran ainsi caractérisé permet de transcrire une information binaire en un champ électrique continu, ayant un sens fonction de la valeur de cette information binaire, sur une zone de l'écran. Cet écran fournit donc une sorte d'image électrique qui peut activer le gant selon l'invention en effleurant la surface de l'écran avec un doigt.

Une première application de cet écran est l'affichage de graphisme pour des aveugles, notamment des caractères Braille. Une seconde application concerne les personnes qui peuvent voir normalement, et qui veulent pouvoir lire des informations alternativement avec leurs yeux et avec leurs doigts. Pour cette application, l'écran comporte au moins une électrode transparente, et il comporte en outre des moyens classiques permettant d'afficher une image, à travers cette électrode transparente.

Cet écran peut en outre être combiné avec des moyens classiques permettant d'entrer des commandes en touchant une zone de l'écran.

L'invention sera mieux comprise et d'autres caractéristiques apparaîtront à l'aide de la description ci-dessous et des figures l'accompagnant :
- La figure 1 représente en vue de face un premier exemple de réalisation du gant selon l'invention et un premier exemple de réalisation de l'écran selon l'invention.
- La figure 2 représente schématiquement en coupe ce premier exemple de réalisation de l'écran et un doigt de ce premier exemple de réalisation du gant selon l'invention.
- La figure 3 représente schématiquement en coupe un doigt d'un deuxième exemple de réalisation du gant selon l'invention.
- La figure 4 représente un troisième exemple de réalisation de l'écran selon l'invention.

Les éléments qui sont identiques dans différents exemples de réalisation portent les mêmes références.

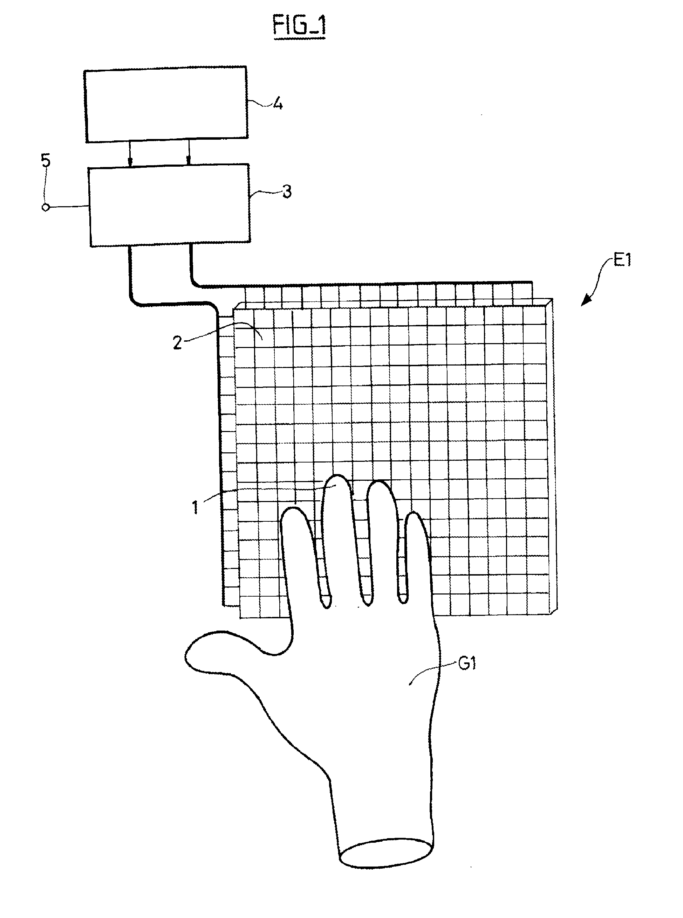

La figure 1 représente en vue de face ce premier exemple de réalisation G1 du gant selon l'invention et de ce premier exemple de réalisation E1 de l'écran selon l'invention. Dans cet exemple, l'utilisateur effleure une des électrodes de l'écran tactile E1 avec un doigt 1 du gant G1.

L'écran tactile E1 comporte :
- une pluralité électrodes 2 disposées sous la forme d'une matrice,
- deux sources de tension électriques 4 pour fournir une tension positive et une tension négative, par rapport à un potentiel de référence,
- et un circuit de commutation 3 relié à ces deux sources de tensions électriques 4, relié à ces électrodes 2 , et relié à une source d'informations binaires 5.

Par exemple, la surface de l'écran E1 comporte une matrice de 16 x 16 électrodes 2 correspondant à 256 zones sur l'écran. Un utilisateur peut ainsi percevoir, par le toucher, 256 valeurs binaires distinctes, en effleurant l'écran avec un doigt 1 du gant G1.

Le circuit de commutation 3 a une entrée reliée à la source d'informations binaires 5 pour recevoir les informations qui devront être perçues par le toucher. Il est commandé de façon à appliquer à une électrode donnée une des deux tensions continues fournies par les sources 4. Le signe de la tension appliquée à une électrode 2 est fonction d'une information binaire fournie par la source d'information 5 et correspondant à cette électrode, c'est-à-dire correspondant à une zone donnée de l'écran.

Dans cet exemple, la source d'information binaire fournit successivement 256 valeurs binaires correspondant respectivement aux 256 électrodes. Le circuit de commutation 3 fournit ensuite les 256 tensions de manière continue, tant qu'il n'y a pas à afficher de nouvelles informations.

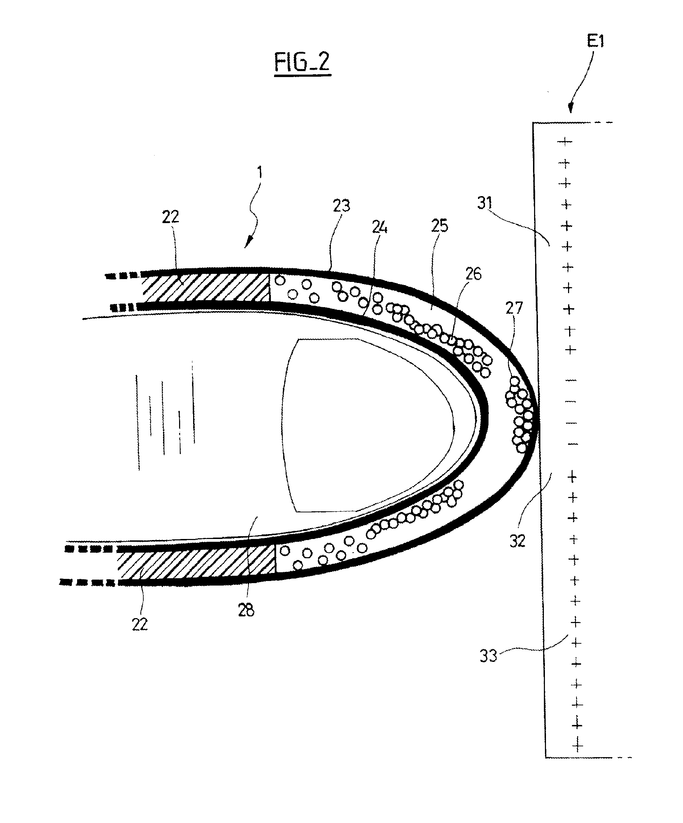

La figure 2 représente en coupe le doigt de gant, 1, de ce premier exemple de réalisation du gant selon l'invention, et une partie de ce premier exemple de réalisation E1 de l'écran tactile selon l'invention. Ce doigt de gant 1 comporte :
- Une paroi interne souple 24 ayant une élasticité et une taille adaptées pour s'ajuster sur un doigt 28 d'un utilisateur, de façon que l'extrémité du doigt de gant 1 soit parfaitement en contact avec le doigt 28 de l'utilisateur.
- Une paroi externe souple 23 approximativement parallèle à la paroi interne 24 de façon à délimiter un espace d'épaisseur approximativement constante entre les deux parois 23-24.
- Une matière souple 22 remplit cet espace sur la plus grande partie de la longueur du doigt de gant 1, excepté à l'extrémité du doigt 1.
- Un liquide diélectrique 25 remplit tout le reste de cet espace, sur la partie située à l'extrémité du doigt 1.
- Des microparticules 26, 27 sont libres de se déplacer dans ce liquide 28. Elles sont chargées électriquement de manière permanente avec une même polarité, par exemple positive.

Les parois 23-24 sont réalisées en une matière diélectrique pour transmettre les champs électriques entre l'écran E1 et le doigt 28 de l'utilisateur. En outre, les parois 23-24 doivent être étanches au moins dans la zone en contact avec le liquide 25. Par exemple, elles peuvent être en caoutchouc, polyéthylène, polystyrène, nylon, vinyle, etc. Les parois 23-24 doivent être assez fines, par exemple un dixième de millimètre, pour permettre une bonne perception des variations de pression sur le doigt 28 de l'utilisateur.

Les microparticules 26-27 sont par exemple des billes de titane, de diamètre voisin d'un micron. Le liquide diélectrique peut être de l'acétone, par exemple.

On peut utiliser d'autres matériaux qui sont connus pour être utilisés dans les dispositifs d'affichage électrophorétiques. Le document US 6.262.833 décrit des microparticules et des fluides utilisables dans des dispositifs d'affichage électrophorétiques. Pour les dispositifs d'affichage électrophorétiques, les microbilles sont encapsulées dans des microcapsules transparentes. Mais pour réaliser le gant selon l'invention, il n'y a pas d'encapsulation des microparticules avant leur introduction entre les deux parois 23-24.

La matière souple de remplissage 22 peut être du néoprène par exemple.

Dans l'exemple représenté, les électrodes de la zone 32 de l'écran E1 reçoivent une tension négative, par rapport à un potentiel de référence, alors que les électrodes des zones 31 et 33 reçoivent une tension positive. L'extrémité du doigt de gant 1 touche la surface de l'écran E1 dans la zone 32. Sous l'action des champs électriques créés par les électrodes de l'écran E1, dans les zones 31,32, 33, les microparticules 26-27, qui sont chargées positivement, subissent des forces électrostatiques qui les déplacent dans le liquide 25 : Des microparticules 27 sont attirées contre la paroi externe 23 à l'extrémité du doigt de gant 1 parce que cette extrémité est proche de la zone 32 où les électrodes reçoivent une tension négative. Au contraire, d'autres microparticules 26, situées en face des zones 31 et 32, sont repoussées contre la paroi interne 24 et compriment une partie du doigt 28 de l'utilisateur, cette partie ayant approximativement la forme d'une couronne. Par conséquent, l'utilisateur ressent une augmentation de pression autour de l'extrémité son doigt 28 quand il passe devant la zone 32. L'utilisateur ressent une diminution de pression quand il déplace son doigt 28 hors de la zone 32 pour effleurer la zone 31 ou la zone 33.

Chaque zone utilisée pour afficher une icône ou une option d'un menu est de préférence conçue de manière à coïncider exactement avec une électrode, ou un nombre entier d'électrodes, de l'écran selon l'invention, pour qu'un utilisateur détecte avec précision la position de cette icône ou de cette option en utilisant le gant selon l'invention.

Si la taille de l'écran et si le nombre d'électrodes sont suffisants, il est possible de représenter un graphisme perceptible avec le gant selon l'invention. En particulier, il est possible de percevoir une suite d'impulsions analogues aux reliefs constituant des caractères Braille.

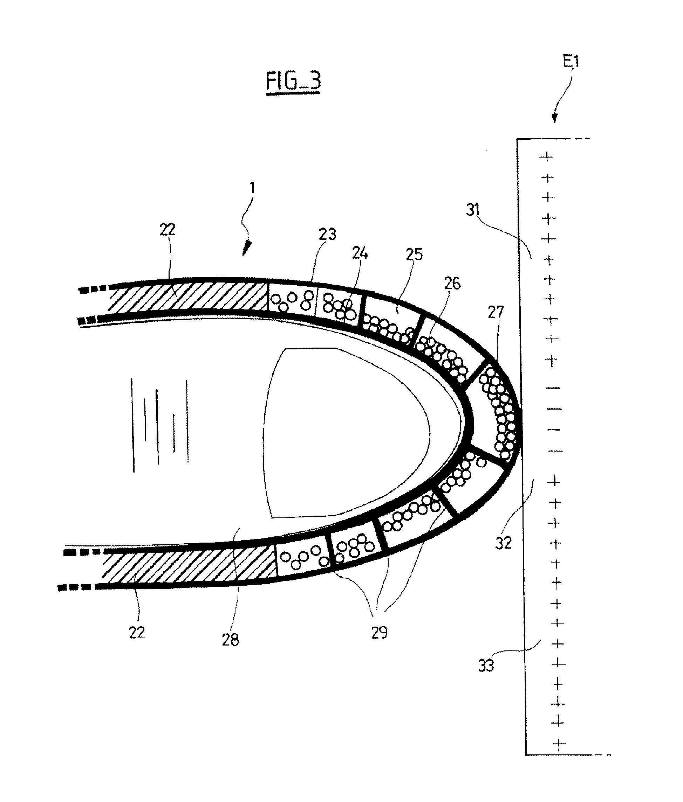

La figure 3 représente schématiquement en coupe un doigt d'un deuxième exemple de réalisation du gant selon l'invention. Il diffère du deuxième exemple par le fait que l'espace, situé entre les parois 23-24 et contenant les microparticules 26-27 comporte de nombreuses parois 29 orthogonales à la paroi externe 23 et à la paroi interne 24. Elles compartimentent cet espace de façon à réduire le déplacement des microparticules dans la direction parallèle à la paroi externe et à la paroi interne, tout en les laissant libres de se déplacer soit vers la paroi interne 24 soit vers la paroi externe 23, selon la direction du champ électrique. D'autre part, ces parois 29 constituent des entretoisent qui maintiennent un écartement à peu près constant entre les parois 23-24. Elles maintiennent ainsi une répartition à peu près uniforme des microparticules dans cet espace, tout autour de l'extrémité du doigt 1.

Dans un mode de réalisation, destiné seulement aux aveugles, l'écran ne comporte que des électrodes destinées à transmettre des informations à un gant selon l'invention.

Dans d'autres modes de réalisation, destinés à être utilisés alternativement avec ou sans le gant selon l'invention : les électrodes sont transparentes et sont placées devant un écran d'affichage classique de façon à permettre de voir un affichage classique, à cristaux liquides par exemple. Dans ce cas, l'écran peut être utilisé alternativement pour percevoir des informations par la vue ou par le toucher.

Cet écran peut en outre comporter des moyens permettant de l'utiliser comme un écran tactile classique, avec ou sans le gant selon l'invention, à condition que le gant et ces moyens de commande tactile soient adaptés pour pouvoir collaborer. Il existe diverses technologies pour réaliser une commande tactile. La plupart de ces technologies sont compatible avec le port d'un gant, mais pas la technologie capacitive. Celle-ci utilise la capacité existant quand le doigt de l'utilisateur est très proche d'une électrode intégrée à l'écran. Cette technologie ne fonctionne généralement pas si l'utilisateur porte un gant car l'épaisseur du gant éloigne l'extrémité du doigt par rapport à l'écran. Un troisième exemple de réalisation du gant selon l'invention permet de l'utiliser sur un écran tactile mettant en oeuvre la technologie capacitive.

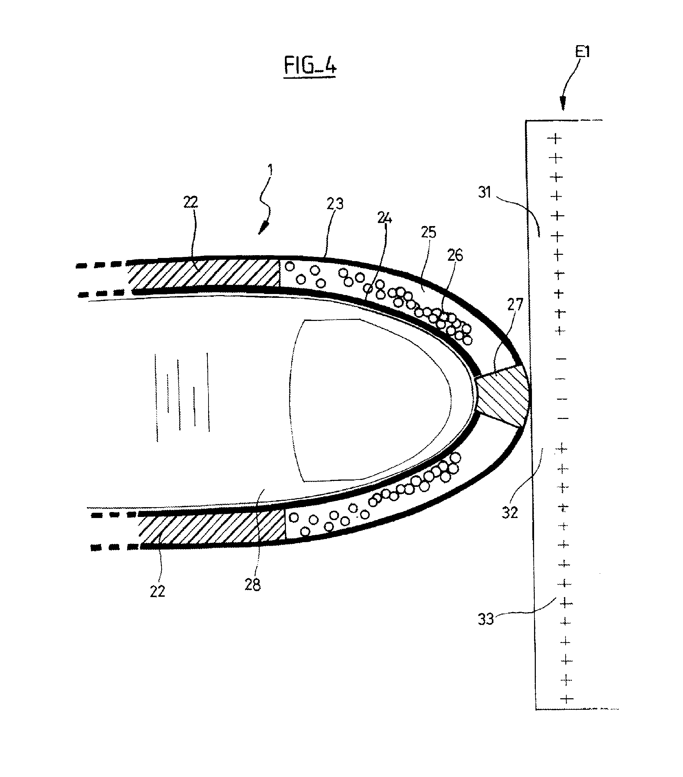

La figure 4 représente schématiquement en coupe ce troisième exemple de réalisation du gant selon l'invention. Il diffère du deuxième exemple par le fait qu'il comporte un pont conducteur 34, traversant la paroi interne 24, la paroi externe 23, et l'espace entre ces deux parois. Il a une forme de tronc de cône. A une extrémité, il affleure à la surface de la paroi 23, à l'extrémité du doigt 1, et à l'autre extrémité il affleure sur la surface de la paroi interne 24. Ainsi il est en contact avec le doigt 28 de l'utilisateur et il est en contact avec la surface de l'écran E1 quand le doigt de gant 1 effleure l'écran E1. Ce pont conducteur a pour effet de prolonger, du point de vue électrique, l'extrémité du doigt 28 de l'utilisateur. Cela permet de commander un écran tactile utilisant un effet capacitif et ayant une sensibilité insuffisante pour fonctionner quand le doigt 28 de l'utilisateur est revêtu d'un gant selon l'invention pour lire des informations par le toucher.

Ce pont 34 peut être constitué d'une matière souple ou rigide, conductrice, par exemple un polymère chargé de carbone.

Les électrodes de l'écran selon l'invention peuvent constituer aussi des électrodes pour la fonction classique de commande tactile par effet capacitif. Par exemple, ces deux fonctions peuvent être activées périodiquement en alternance.

Bien entendu, le troisième exemple de réalisation pourrait comporter en outre des parois compartimentant l'espace contenant les microparticules, comme dans le deuxième exemple.

Dans d'autres modes de réalisation, le gant peut comporter une pluralité de doigts de gant réalisés comme décrit précédemment.

Inversement, une variante simplifiée du gant selon l'invention peut ne comporter qu'un doigt et rien d'autre, le reste de la main restant découvert.

## Revendications

1. Gant (G1) permettant de lire des informations par le toucher, Lorsqu'un doigt (1) de ce gant effleure un écran (E1) comportant au moins une zone (31, 32, 33) émettant un champ électrique continu, **caractérisé en ce qu'**il comporte au moins un doigt (1) de gant comportant :
- une paroi interne (24) souple et diélectrique, apte à recevoir un doigt (28) d'un usager,
- une paroi externe (23), souple et diélectrique,
- un liquide (25) contenu dans au moins un espace entre ces deux parois,
- et des microparticules (26, 27) placées dans ce liquide, ces microparticules étant électriquement chargées avec une même polarité, et étant aptes à se déplacer dans ce liquide sous l'action d'un champ électrique.

2. Gant selon la revendication 1, **caractérisé en ce qu'**il comporte en outre des parois (29) orthogonales à la paroi externe (23) et à la paroi interne (24), et compartimentant l'espace délimité par la paroi externe (23) et la paroi interne (24) de façon à réduire le déplacement des microparticules dans la direction parallèle à la paroi externe (23) et à la paroi interne (24), tout en les laissant libres de se déplacer soit vers la paroi interne (24) soit vers la paroi externe (23).

3. Gant selon la revendication 1, **caractérisé en ce qu'**il comporte en outre un pont conducteur (34) traversant la paroi interne (24) et la paroi externe (23), à l'extrémité d'un doigt de gant, de façon à prolonger électriquement l'extrémité du doigt (28) d'un utilisateur du gant.

4. Ecran tactile (E1) permettant de lire des informations par le toucher, comportant :
- au moins une électrode (2),
- au moins une source de tension électrique (4),
- et des moyens de commutation (3) reliés à cette électrode (2) pour créer un champ électrique à partir de cette électrode, ces moyens de commutation étant commandés par une source (5) d'informations ;
**caractérisé en ce que** ces moyens de commutation (3) sont commandés de façon à appliquer à cette électrode une tension continue qui peut prendre deux signes opposés, son signe étant fonction d'une information binaire fournie par la source d'information (5).

5. Ecran tactile selon la revendication 4 **caractérisé en ce que** chaque électrode (2) est transparente,
et **en ce qu'**il comporte en outre des moyens classiques permettant d'afficher une image, à travers cette électrode transparente.

6. Ecran tactile selon la revendication 5, **caractérisé en ce qu'**il comporte en outre des moyens permettant d'entrer une commande en touchant l'écran.
